# EUROPÄISCHE PATENTSCHRIFT

(11) **EP 4 258 490 B1**
(45) Veröffentlichungstag und Bekanntmachung des Hinweises auf die Patenterteilung: **22.07.2026**
(21) Anmeldenummer: 23158916.9
(22) Anmeldetag: 28.02.2023
(51) Int. Cl.: B29C 45/14, H01R 13/52, H01R 13/58, H01R 43/00, B29C 45/16

(54) **STECKVERBINDER SOWIE VORRICHTUNG UND VERFAHREN ZUM HERSTELLEN EINER SEKUNDÄRVERRIEGELUNG FÜR EINEN STECKVERBINDER**
PLUG CONNECTOR AND DEVICE AND METHOD FOR PRODUCING A SECONDARY LOCK FOR A PLUG CONNECTOR
CONNECTEUR ENFICHABLE AINSI QUE DISPOSITIF ET PROCÉDÉ DE FABRICATION D'UN VERROUILLAGE SECONDAIRE POUR UN CONNECTEUR ENFICHABLE

(30) Priorität: 06.04.2022 DE 102022108296
(43) Veröffentlichungstag der Anmeldung: 11.10.2023
(73) Patentinhaber: MD ELEKTRONIK GmbH, 84478 Waldkraiburg (DE)
(72) Erfinder: Andert, Alexander, 84478 Waldkraiburg (DE)

(56) Entgegenhaltungen:
- EP-A1- 2 999 057
- EP-A1- 3 836 313
- JP-U- H0 638 171
- US-B2- 8 177 573

## Beschreibung

### Technisches Gebiet

Die Erfindung betrifft einen Steckverbinder sowie eine Vorrichtung und ein Verfahren zum Herstellen einer Sekundärverrieglung für einen Steckverbinder, insbesondere einen wasserdichten Steckverbinder.

### Stand der Technik

Kabel werden zum Weiterleiten von elektrischen und/oder optischen Signalen verwendet. Zum Verbinden von zwei Kabeln miteinander, oder zum Verbinden eines Kabels mit einem anderen Bauteil, werden Steckverbinder genutzt. Bei der Kabelkonfektion wird zumindest ein Steckverbinder an einem Ende eines Kabels befestigt. In bestimmten Bereichen, wie dem Automotive Bereich, werden besondere Anforderungen an die Zuverlässigkeit bei der Kabelkonfektion und an die spätere Verbindung gestellt. Eine Anforderung ist die Sicherung der Verbindung, zum Beispiel über eine sogenannte Sekundärverriegelung. Eine weitere Anforderung kann die Wasserdichtheit des Steckverbinders umfassen.

Um die Wasserdichtheit eines Steckverbinders zu erreichen, werden im Stand der Technik mehrere Komponenten zusammengebaut, wobei jede Komponente eine eigene Funktionalität aufweist, und insgesamt ein wasserdichter Steckverbinder erhalten wird. Die Wasserdichtheit wird dabei in der Regel durch ein separates Dichtelement bewirkt.

Die Druckschrift JP H06 38171 U betrifft eine doppelt-verriegelnde Struktur eines wasserdichten Steckers. Die doppelt-verriegelnde Struktur weist zumindest einen zylindrischen Teil und Verriegelungsvorsprünge auf, die teilweise elastisch verformt werden können, so dass die Verriegelungsvorsprünge mit Verriegelungslochteilen in Eingriff gebracht werden können.

Die Druckschrift EP 3 836 313 A1 betrifft ein Stützelement zur Positionierung eines Kabels in einem Loch, wobei das Stützelement einen Stützteil und einen Halterungsteil umfasst, die miteinander verbunden sind und aus unterschiedlichen Materialien, insbesondere verschiedenen Harzmaterialien, hergestellt sind. Zur Befestigung des Stützelements in dem Loch umfasst der Halterungsteil mindestens ein Rückhalteelement.

Die Steckverbinder im Stand der Technik haben zumindest den Nachteil, dass eine größere Anzahl von Komponenten für einen Steckverbinder gebraucht wird. Die größere Anzahl ist mit höheren Beschaffungskosten sowie einer höheren Anzahl an Montagevorgängen bzw. -prozessen verbunden. Die höheren Kosten machen das Produkt teurer in der Herstellung und durch die Mehrzahl an Prozessschritten dauert die Fertigstellung länger. Bei einigen Steckverbindern im Stand der Technik kommt als Nachteil hinzu, dass sie nur schwer oder gar nicht demontierbar sind, und/oder deutliche strukturelle Unterschiede zwischen einer wasserdichten und einer nicht-wasserdichten Variante aufweisen. Die Demontierbarkeit ist jedoch eine Voraussetzung im Automotive Bereich, und anpassungsfähige Systeme ohne große strukturelle Unterschiede werden in der Regel bevorzugt.

### Beschreibung der Erfindung

Es ist daher eine Aufgabe der vorliegenden Erfindung einen Steckverbinder sowie eine Vorrichtung und ein Verfahren zur Herstellung bereitzustellen, wobei der Steckverbinder eine Wasserdichtheit und eine reduzierte Anzahl an Komponenten aufweisen kann.

Die oben genannte Aufgabe wird durch einen Steckverbinder nach Anspruch 1, ein Verfahren nach Anspruch 4 sowie eine Vorrichtung nach Anspruch 9 gelöst.

Weitere vorteilhafte Ausgestaltungsformen der Erfindung lassen sich den Unteransprüchen, der Beschreibung sowie den Zeichnungen entnehmen. Insbesondere wird die oben genannte Aufgabe gelöst durch einen Steckverbinder für ein Kabel, aufweisend ein Gehäuse mit zumindest einer Öffnung und einem Hohlraum, wobei das Kabel über die Öffnung in den Hohlraum einführbar ist, zumindest einen Hinterschnitt, der am Umfang des Hohlraums ausgebildet ist, eine Sekundärverriegelung, die lösbar mit dem Hinterschnitt in Eingriff stehen kann, wobei das Kabel durch die Sekundärverriegelung in dem Gehäuse befestigt werden kann, und wobei die Sekundärverriegelung einen Grundkörper umfasst, der einstückig mit einer Dichtung ausgebildet ist, so dass die Sekundärverrieglung das Gehäuse wasserdicht verschließen kann.

Bei dem vorliegenden Steckverbinder fixiert die Sekundärverriegelung im zusammengebauten Zustand des Steckverbinders das Kabel in dem Gehäuse. Die Fixierung erfolgt zum einen durch Reibschluss am Kabel, und zum anderen durch Formschluss am Insert bzw. der Crimphülse, die am Kabel befestigt sind. Das Kabel ist somit mehrfach in dem Gehäuse gesichert. Weiterhin ist der vorliegende Steckverbinder nach der Montage auch wieder lösbar. Zum Lösen wird die Sekundärverriegelung im Wesentlichen entlang ihrem Umfang zusammengedrückt und aus dem Gehäuse gezogen. Der Steckverbinder gemäß der Erfindung ist wasserdicht. Eine Variante des Steckverbinders, die nicht unter den Umfang der beigefügten Ansprüche fällt, kann als nicht-wasserdichte Variante eingesetzt werden. Der Grundkörper der Sekundärverriegelung ist bei beiden Varianten im Wesentlichen gleich. Bei der nicht-wasserdichten Variante kann im Wesentlichen lediglich die Dichtung an der Sekundärverriegelung beim Herstellen der Sekundärverriegelung weggelassen werden. Dadurch ist der vorliegende Steckverbinder flexibel einsetzbar. In der wasserdichten Variante werden durch den einstückigen Aufbau des Grundkörpers der Sekundärverriegelung mit der Dichtung sowohl die Fixier-Funktion als auch die Wasserdichtheit-Funktion durch die Sekundärverriegelung erreicht. Eine separate Dichtung, wie im Stand der Technik, ist überflüssig. Der Steckverbinder ist durch die geringere Anzahl an Komponenten schneller und einfacher zu montieren.

Bevorzugt weist die Dichtung zumindest eine äußere Dichtungslippe auf, die radial nach außen von der Dichtung absteht, um eine wasserdichte Abdichtung zwischen der Sekundärverriegelung und dem Gehäuse zu erreichen, und/oder weist die Dichtung zumindest eine innere Dichtungslippe auf, die radial nach innen von der Dichtung absteht, um eine wasserdichte Abdichtung zwischen der Sekundärverriegelung und dem Kabel zu erreichen. Die zumindest eine äußere Dichtungslippe umfasst bevorzugt eine Mehrzahl an äußeren Dichtungslippen. Eine Mehrzahl an äußeren Dichtungslippen erhöht die Zuverlässigkeit der Dichtung. Insbesondere ist die zumindest eine äußere Dichtungslippe aus einem elastischen Material gebildet. Durch das elastische Material ist die zumindest eine äußere Dichtungslippe flexibel. Und bevorzugt ist der äußere Radius der äußeren Dichtungslippe größer als der Radius der Öffnung am Gehäuse bzw. der Radius des Hohlraums im Gehäuse. Dadurch presst sich die äußere Dichtungslippe bei der Montage an die Wandung der Öffnung bzw. des Hohlraums, und bildet eine wasserdichte Dichtung zur Außenseite. Gleiches gilt für die zumindest eine innere Dichtungslippe, die die Öffnung bzw. den Hohlraum zum Kabel hin abdichtet. Die Verriegelung der Sekundärverriegelung in dem Hinterschnitt und die Fixierung des Kabels im Gehäuse sind jedoch unabhängig von den äußeren und/oder inneren Dichtungslippen, so dass durch die Funktion der Dichtung die Funktion der Sekundärverriegelung nicht beeinträchtigt wird

Die Sekundärverriegelung einen ersten Teilbereich und einen zweiten Teilbereich aufweist, wobei die Dichtung ausschließlich im ersten Teilbereich angeordnet ist. Der Grundkörper der Sekundärverriegelung weist einen Schlitz entlang einer Längsrichtung auf, und füllt die Dichtung im ersten Teilbereich den Schlitz aus. Durch den Schlitz kann die Sekundärverriegelung in Umfangsrichtung gestaucht bzw. zusammengedrückt werden. Der zweite Teilbereich weist eine Hohlkegelstumpfform, die sich vom Ende des ersten Teilbereichs bis zum Ende der Sekundärverriegelung hin erweitert, und weist den vollständigen Schlitz durch den Hohlkegelstumpf entlang der Längsrichtung der Sekundärverriegelung auf. Auch bei einem festeren Material kann der Grundkörper somit elastisch in seinem Umfang verändert bzw. reduziert werden. Die Reduzierung des Umfangs der Sekundärverriegelung wird zum Bespiel beim Lösen der Sekundärverriegelung aus dem Gehäuse verwendet. Da die Dichtung den Schlitz ausfüllt, kann die zumindest eine äußere und/oder innere Dichtungslippe vollumfänglich an der Sekundärverriegelung verlaufen, und die Öffnung bzw. den Hohlraum vollumfänglich abdichten.

Bevorzugt ist der Grundkörper aus einem härteren Material als die Dichtung gebildet, so dass die Sekundärverriegelung stabil und elastisch verformbar ist. Das härtere Material des Grundkörpers gibt der Sekundärverriegelung Stabilität. Durch die Stabilität hält die Sekundärverriegelung ungewollten (Zug-)Kräften stand und fixiert das Kabel sicher in dem Gehäuse. Da die Dichtung aus einem weicheren Material gebildet ist als der Grundkörper, kann die Sekundärverrieglung weiterhin in Umfangsrichtung zusammengedrückt werden und weist die elastischen Eigenschaften auf, um die Sekundärverriegelung in das Gehäuse einzuführen und auch wieder zu lösen.

Die oben genannte Aufgabe wird weiterhin insbesondere gelöst durch ein Verfahren zum Herstellen einer Sekundärverrieglung für einen Steckverbinder, wobei das Verfahren die folgenden Schritte aufweist: Anwenden eines Zwei-Komponenten Verfahrens, und Bilden eines Grundkörpers der Sekundärverrieglung aus einem ersten Material; wobei der Grundkörper mit einem ersten Teilbereich und einem zweiten Teilbereich gebildet wird; wobei ein Schlitz entlang einer Längsrichtung des Grundkörpers gebildet wird, und wobei der zweite Teilbereich mit einer Hohlkegelstumpfform gebildet wird, die sich vom Ende des ersten Teilbereichs bis zum Ende der Sekundärverriegelung hin erweitert, wobei der Schlitz entlang der Längsrichtung der Sekundärverriegelung vollständig durch den Hohlkegelstumpf gebildet wird; und danach Bilden einer Dichtung aus einem zweiten Material auf dem Grundkörper der Sekundärverriegelung sodass der Grundkörper einstückig mit der Dichtung ausgebildet ist, wobei die Dichtung ausschließlich im ersten Teilbereich gebildet wird und den Schlitz im ersten Teilbereich ausfüllt. Das Zwei-Komponenten-Verfahren ermöglicht das Bilden eines einstückigen Bauteils aus zwei Komponenten. Insbesondere werden im Zwei-Komponenten-Verfahren zwei unterschiedliche Kunststoffe zu einem Bauteil vereint. Das Bilden des Grundkörpers und das anschließende Bilden der Dichtung auf dem Grundkörper hat den Vorteil, dass auch nur der Grundkörper gebildet werden kann, um zum Beispiel eine nicht-wasserdichte Variante des Steckverbinders herzustellen. Zum anderen könnte auf bereits produzierte Grundkörper zu einem späteren Zeitpunkt eine Dichtung aufgebracht werden. Der Herstellungsprozess der Sekundärverriegelung ist somit sehr flexibel.

Bevorzugt umfasst das Zwei-Komponentenverfahren ein Spritzgussverfahren, und ist das erste Material härter als das zweite Material. Spritzgussverfahren ermöglichen die zuverlässige Herstellung von Kunststoffbauteilen, insbesondere in Bezug auf die Haltbarkeit der hergestellten Kunststoffbauteile. Dadurch, dass das erste Material härter ist, verleiht es dem Bauteil eine Grundstruktur, so dass das zweite Material zuverlässig, insbesondere ohne ungewollte Verformungen am Grundkörper zu erzeugen, auf dem Grundkörper aufgebracht werden kann. Im Stand der Technik werden Dichtelemente vorwiegend im Gesamtumfang erstellt, d.h. die harte Komponente wird als Ganzes (ohne Unterbrechungen) und die Dichtung, als separates Bauteil, wird ebenfalls als Ganzes umlaufend erstellt. Dadurch ist die harte Komponente nicht beweglich bzw. nicht flexibel. Durch das Ausbilden einer Aussparung, insbesondere eines Schlitzes, entlang der Längsachse, wird der Grundkörper bzw. die Sekundärverriegelung flexibel. Damit weist das vorliegende Verfahren Herstellungsschritte auf, die vom Stand der Technik abweichen, mit dem Ergebnis, dass das hergestellte Bauteil anders wirkt als der Stand der Technik.

Bevorzugt werden im Schritt des Bildens des Grundkörpers der Sekundärverriegelung Vertiefungen, insbesondere Nuten, an dem Grundkörper gebildet, so dass der Grundkörper mit Hilfe der Vertiefungen beim Bilden der Dichtung zentriert werden kann. Um die Dichtung auf den Grundkörper aufzubringen muss am Werkzeug eine Positionsänderung durchgeführt werden. Dabei gibt es mehrere Möglichkeiten, zum Beispiel ein Drehen des gesamten Werkzeugs oder Bewegen einer Indexplatte (ein Teil des Werkzeugs) von einer ersten Position in zumindest eine weitere Position. Die Nuten helfen dabei den Grundkörper bei einer Positionsänderung zu fixieren. Die Vertiefungen oder Nuten haben keinen Einfluss auf die Wasserdichtheit des Steckverbinders.

Bevorzugt werden im Schritt des Bildens des Grundkörpers der Sekundärverriegelung Löcher in dem Grundkörper gebildet, und diese Löcher werden beim Bilden der Dichtung mit dem zweiten Material gefüllt. Die Löcher dienen zur Entlüftung der Kavitäten während eines Füllvorgangs, damit die Luft durch die Schmelze nicht eingeschlossen wird und Blasen oder Lunker im Bauteil bildet. Weiterhin dienen die Löcher zur besseren Verbindung des Grundkörpers mit der Dichtung. Dies ist von Vorteil, da beim Aufschieben der fertigen Sekundärverrieglung auf dem Kabel bzw. in das Gehäuse hohe Kräfte auf die Dichtung wirken können.

Die oben genannte Aufgabe wird weiterhin insbesondere gelöst durch eine Vorrichtung für das Verfahren, aufweisend ein Werkzeug zur Herstellung von Spritzgussteilen mit zumindest einem geometrischen Unterschied, wobei eine erste Geometrie an dem Werkzeug eine Kontur für den Grundkörper der Sekundärverriegelung aufweist, wobei die erste Geometrie zum Bilden des Grundkörpers mit einem ersten Teilbereich, einem zweiten Teilbereich, einem Schlitz entlang einer Längsrichtung des Grundkörpers und einer Hohlkegelstumpfform des zweiten Teilbereichs ausgebildet ist, wobei sich die Hohlkegelstumpfform vom Ende des ersten Teilbereichs bis zum Ende der Sekundärverriegelung hin erweitert und der Schlitz entlang der Längsrichtung der Sekundärverriegelung vollständig durch den Hohlkegelstumpf gebildet wird; und eine zweite Geometrie an dem Werkzeug eine Kontur für den Grundkörper mit der Dichtung aufweist, wobei die zweite Geometrie zum Bilden der Dichtung aus einem zweiten Material auf dem Grundkörper der Sekundärverriegelung ausgebildet ist, sodass der Grundkörper einstückig mit der Dichtung ausgebildet ist, wobei die Dichtung ausschließlich im ersten Teilbereich gebildet wird und den Schlitz im ersten Teilbereich ausfüllt. Das Werkzeug ist speziell, in dem es einen geometrischen Unterschied aufweist, so dass es eine erste Geometrie (Kavität) umfasst, die die Kontur des Grundkörpers (Vorspritzlings) aufweist, und eine zweite Geometrie umfasst, die die Kontur des Grundkörpers mit der Kontur der Dichtung umfasst. Für das gesamte Herstellungsverfahren wird dadurch nur ein Werkzeug benötigt. Dies spart Platz, Kosten und Zeit bei der Herstellung.

Die folgende Beschreibung von Ausführungsbeispielen erfolgt unter Bezugnahme auf die begleitenden Figuren. Dabei zeigen:
- Fig. 1: eine perspektivische Ansicht einer Ausführungsform eines Steckverbinders im montierten Zustand;
- Fig. 2: eine seitliche Querschnittsansicht der Fig. 1 ohne eingeführte Sekundärverriegelung;
- Fig. 3: eine seitliche Querschnittsansicht der Fig. 1 mit eingeführter Sekundärverrieglung;
- Fig. 4: eine perspektivische Ansicht einer Ausführungsform einer Sekundärverriegelung;
- Fig. 5: eine weitere perspektivische Ansicht der Sekundärverriegelung aus Fig. 4;
- Fig. 6: eine Seitenansicht der Sekundärverriegelung aus Fig. 4; und
- Fig. 7: eine perspektivische Ansicht einer Ausführungsform des Grundkörpers der Sekundärverriegelung aus Figs. 4 - 6.

Im Folgenden werden Ausführungsbeispiele im Detail mit Bezug auf die Figuren beschrieben.

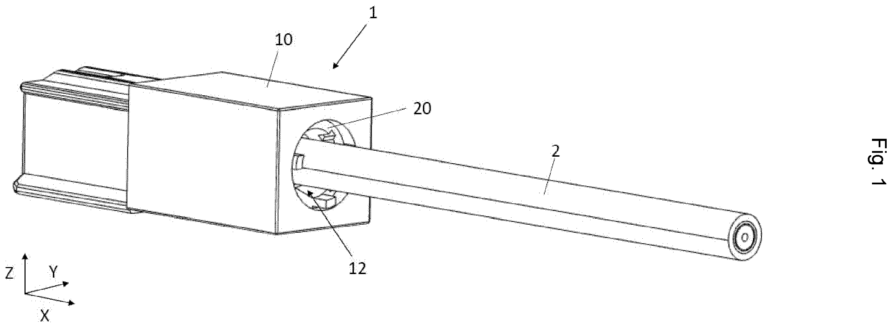

Fig. 1 zeigt ein Ausführungsbeispiel eines Steckverbinders 1 an einem Kabel 2. Der Steckverbinder 1 wird bei der Kabelkonfektion fest mit einem Ende des Kabels 2 verbunden. Die Verbindung ist insbesondere gesichert, wasserdicht und für ein Recycling wieder demontierbar.

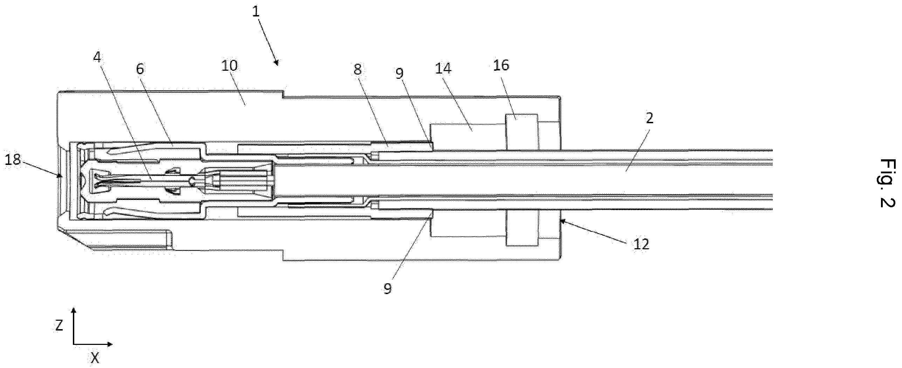

Der dargestellte Steckverbinder 1 weist ein Gehäuse 10 mit einer Öffnung 12 und einem Hohlraum 14 auf. Die Öffnung 12 bildet einen Zugang zu dem Hohlraum 14, so dass das Kabel 2 über die Öffnung 12 in den Hohlraum 14 eingeführt werden kann. Der Hohlraum 14 weist zumindest einen Hinterschnitt 16 an seinem (inneren) Umfang auf (s. Fig. 2). Der Hinterschnitt 16 kann umlaufend, oder nur in einem oder mehreren Umfangsabschnitten, ausgebildet sein. Die Tiefe des Hinterschnitts 16 ist in Abstimmung mit der verwendeten Sekundärverriegelung 20 vorbestimmt.

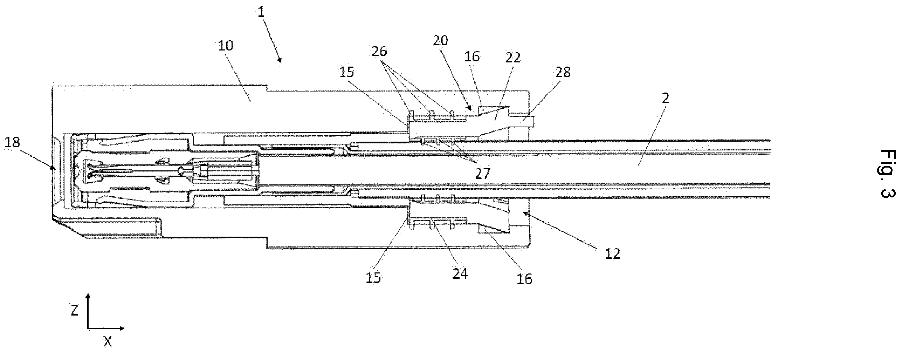

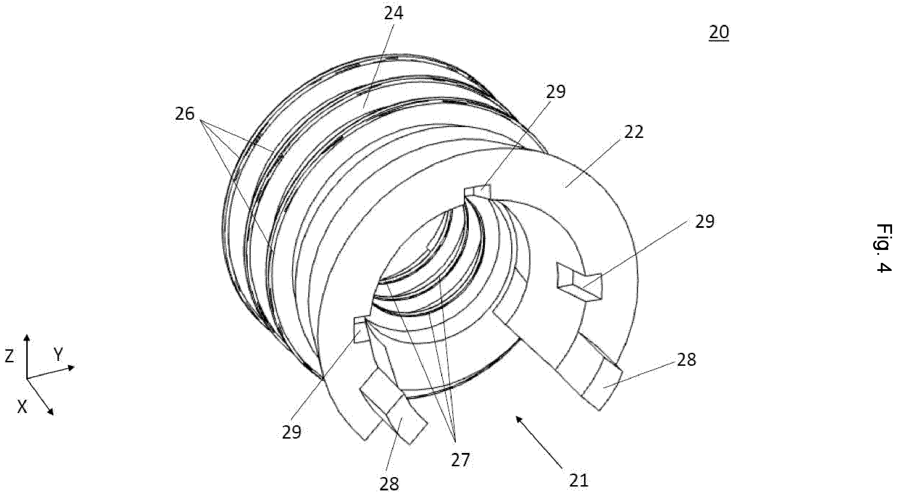

Die dargestellte Ausführungsform des Steckverbinders 1 weist weiterhin eine Sekundärverriegelung 20 auf. Die Sekundärverriegelung 20 kann beim Zusammenbau lösbar mit dem Hinterschnitt 16 in Eingriff gebracht werden. Im zusammengebauten Zustand ist die Sekundärverriegelung 20 sicher mit dem Hinterschnitt 16 fixiert. Der Eingriff kann auch wieder gelöst werden. Das Lösen muss jedoch bewusst, und bevorzugt mit Hilfe von Werkzeug, erfolgen. Zum Lösen werden üblicherweise die Vorsprünge 28 (s. Fig. 4) aufeinander zu bewegt, so dass sich der äußere Durchmesser der Sekundärverriegelung 20 soweit verkleinert, dass die Sekundärverriegelung 20 aus dem Hinterschnitt 16 und über die Öffnung 12 aus dem Gehäuse 10 entnommen werden kann. Weiterhin kann über die Sekundärverriegelung 20 das Kabel 2 in dem Gehäuse 10 befestigt werden (s. Fig. 3). Zur Befestigung des Kabels 2 übt die Sekundärverriegelung 20 im zusammengebauten Zustand eine Druck- bzw. Klemmkraft in radialer Richtung auf das Kabel 2 aus, so dass das Kabel 2 über Reibschluss in dem Gehäuse 10 gehalten wird. Daneben verhindert die Sekundärverrieglung 20 eine Bewegung des Inserts bzw. der Crimphülse 8, die am Kabel 2 befestigt sind, und fixiert dadurch das Kabel 2 über Formschluss in dem Gehäuse 10.

Das dargestellte Kabel 2 ist ein Koaxialkabel, das für eine Kontaktierung mit einem komplementären Verbinder (nicht gezeigt) zumindest einen Innenleiterkontakt 4 und einen Außenleiterkontakt 6 umfasst. Der Innen- und der Außenleiterkontakt 4, 6 sind mit Hilfe der Crimphülse 8 an dem Kabel 2 befestigt. Im zusammengebauten Zustand liegt ein Crimphülsenanschlag 9 an der Sekundärverriegelung 20 an (s. Fig. 3), so dass das Kabel 2 mit Insert (Innen- und Außenleiterkontakt 4, 6 mit Crimphülse 8) formschlüssig in dem Gehäuse 10 gehalten wird. Über eine, der Öffnung 12 bevorzugt gegenüberliegende, Kontaktöffnung 18 kann eine Verbindung zwischen dem Innen- und Außenleiterkontakt 4, 6 des Kabels 2 und einem komplementären Verbinder hergestellt werden.

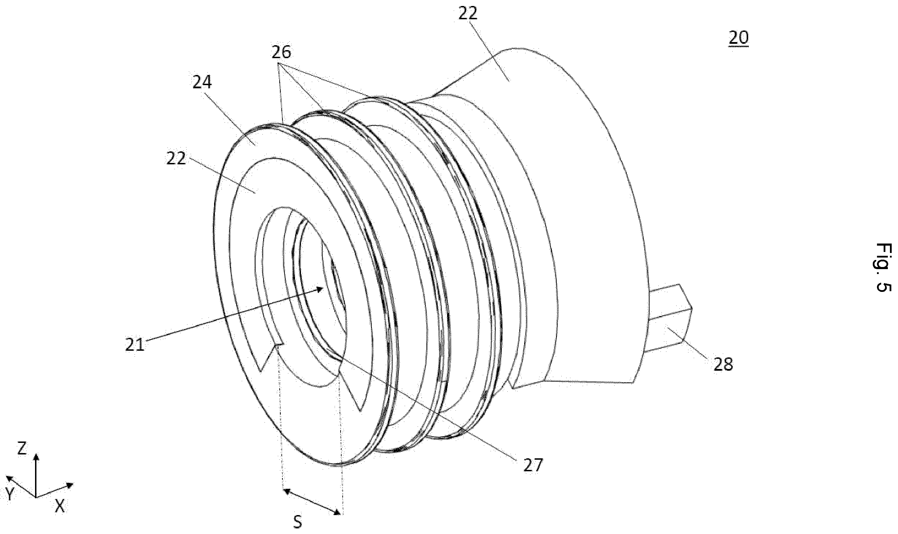

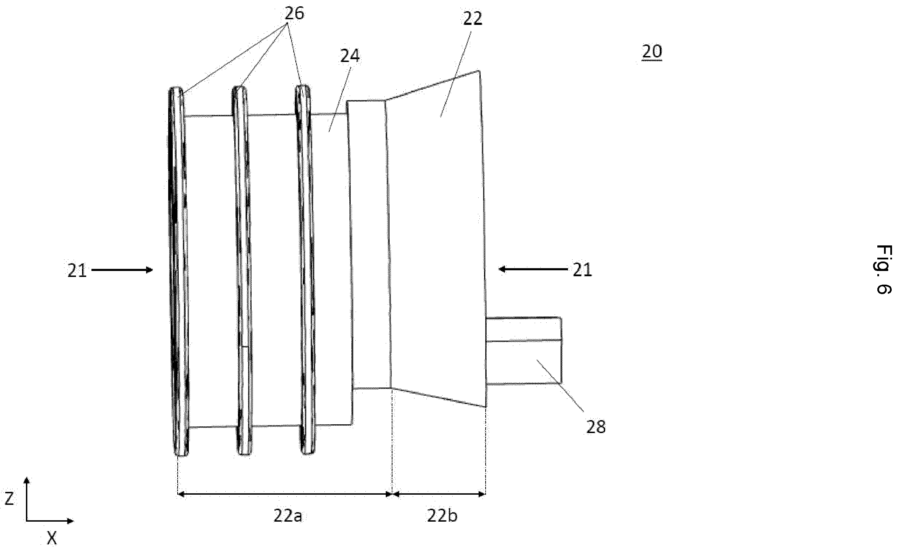

Figs. 4 - 6 zeigen eine Ausführungsform der Sekundärverriegelung 20 im Detail. Die Sekundärverriegelung 20 umfasst einen Grundkörper 22 mit einer Durchgangsöffnung 21. Durch die Durchgangsöffnung 21 kann das Kabel 2 hindurchgeführt werden bzw. die Sekundärverriegelung 20 auf das Kabel 2 aufgeschoben werden. Der Grundkörper 22 der Sekundärverriegelung 20 ist einstückig mit einer Dichtung 24 ausgebildet. Einstückig meint dabei eine nichtlösbare Verbindung zwischen Grundkörper 22 und Dichtung 24.

Der Grundkörper 22 ist bevorzugt aus einem härteren Material als die Dichtung 24 gebildet. Dadurch gibt der Grundkörper 22 der Sekundärverriegelung 20 eine gewisse Stabilität. Damit der Grundkörper 22 weiterhin eine Flexibilität, insbesondere in Bezug auf seinen äußeren Umfang aufweist, wurde in der dargestellten Ausführungsform des Grundkörpers 22 entlang seiner Längsachse X ein Schlitz S gebildet. Der Schlitz S kann in alternativen Ausführungsformen lediglich eine Vertiefung umfassen, so dass der Grundkörper 22 biegsam und in seinem äußeren Umfang elastisch veränderbar wird.

Der Grundkörper 22 kann weiterhin ein oder mehrere Löcher an einer äußeren Oberfläche 25b aufweisen. Die Löcher 23 erstrecken sich bevorzugt von der äußeren Oberfläche 25b zu einer inneren Oberfläche 25a. Durch diese Löcher kann die Dichtung 24 bei der Herstellung hindurchtreten und sich besser mit dem Grundkörper 22 verbinden. Vertiefungen 29 oder Nuten im Grundkörper 22 können bei der Herstellung verwendet werden, um den Grundkörper 22 zu fixieren. Schließlich können ein oder mehrere Vorsprünge 28 an dem Grundkörper 22 angeordnet sein. Die Vorsprünge 28 können auch Vertiefungen oder Öffnungen umfassen. Mit Hilfe der Vorsprünge kann, wie bereits beschrieben, eine Sekundärverrieglung 20 aus dem Gehäuse 10 gelöst werden.

Die Dichtung 24 weist zumindest eine äußere Dichtungslippe 26 auf. In den dargestellten Ausführungsformen weist die Dichtung 24 eine Mehrzahl, bevorzugt zumindest drei, äußere Dichtungslippen 26 auf. Die zumindest eine äußere Dichtungslippe 26 steht radial nach außen von der Dichtung 24 ab. Durch diese Struktur kann die Dichtung 24 im zusammengebauten Zustand eine wasserdichte Abdichtung zwischen der Sekundärverriegelung 20 und dem Gehäuse 10 bewirken. Insbesondere steht die zumindest eine äußere Dichtungslippe 26 so weit von der Dichtung 24 ab, dass sie im zusammengebauten Zustand unter Spannung das Gehäuse 10 kontaktiert. Dadurch wird eine sichere Abdichtung gewährleistet.

Weiterhin weist die dargestellte Dichtung 24 zumindest eine innere Dichtungslippe 27 auf. Insbesondere weist die Dichtung 24 eine Mehrzahl von inneren Dichtungslippen 27 auf. Die zumindest eine innere Dichtungslippe 27 steht radial nach innen von der Dichtung 24 ab. Durch diese Struktur wird im zusammengebauten Zustand eine wasserdichte Abdichtung zwischen der Sekundärverriegelung 20 und dem Kabel 2 erreicht. Die zumindest eine innere Dichtungslippe 27 kann dabei im zusammengebauten Zustand, wie die zumindest eine äußere Dichtungslippe 26, unter Spannung an dem Kabel 2 anliegen.

Um wasserdicht zu sein, ist der Schlitz S im Grundkörper 22 entlang seiner Längsrichtung X durch die Dichtung 24 ausfüllt. Weiterhin ist die zumindest eine äußere Dichtungslippe 26 und/oder die zumindest eine innere Dichtungslippe 27 vollumfänglich, d. h. auch über den Schlitz S, gebildet. Die Dichtung 24 umfasst in der dargestellten Ausführungsform ein weiches elastisches Material. Dadurch kann der Grundkörper 22 und insgesamt die Sekundärverriegelung 20 elastisch zusammengedrückt werden, auch wenn die Dichtung 24 den Schlitz S ausfüllt. Mit Hilfe dieses Aufbaus kann die Sekundärverrieglung 20 das Gehäuse 10 im zusammengebauten Zustand wasserdicht verschließen. Das Verschließen bezieht sich dabei insbesondere auf die Öffnung 12 am Gehäuse 10.

In einer bevorzugten Ausführungsform wird bei der Montage des Steckverbinders 1 zunächst eine Sekundärverriegelung 20 auf dem Kabel 2 angeordnet, d.h. auf das Kabel 2 geschoben. Danach wird das Insert des Kabels 2 über die Öffnung 12 in das Gehäuse 10 eingeführt. Anschließend wird die Sekundärverriegelung 20 entlang des Kabels 2 in Richtung zum Gehäuse 10 verschoben. Das Gehäuse 10 weist im Bereich der Öffnung 12 einen kleineren Durchmesser als ein zweiter Teil 22b der Sekundärverriegelung 20 auf. Beim Einführen der Sekundärverrieglung 20 in das Gehäuse 10, wird die Sekundärverriegelung 20 in dem zweiten Teilbereich 22b radial zusammengedrückt. Das Einführen wird fortgesetzt bis die gesamte Sekundärverriegelung 20 im Gehäuse 10 angeordnet ist. Beim Erreichen der Endposition, d.h. wenn sich der zweite Teilbereich 22b im Bereich des Hinterschnitts 16 befindet, erweitert sich die Sekundärverriegelung 20 in dem zweiten Teilbereich 22b wieder radial. Die Erweiterung geschieht aufgrund der Elastizität der Sekundärverriegelung. Durch die Erweiterung greift die Sekundärverriegelung 20 in den Hinterschnitt 16 ein und verrastet im Gehäuse 10 formschlüssig. Ein erster Teilbereich 22a der Sekundärverriegelung 20 steht im zusammengebauten Zustand direkt an einer umlaufenden Rippe des Inserts bzw. des Crimphülsenanschlags 9 an, und sichert damit die Fixierung des Inserts. Ein Herausziehen des Inserts bzw. des Kabels 2, das mit dem Insert befestigt ist, aus dem Gehäuse 10 wird damit unterbunden. Gleichzeitig entsteht über die Sekundärverriegelung 20 eine vollumfängliche Dichtfläche, wodurch der Steckverbinder 1 wasserdicht ist.

In einer Ausführungsform erfolgt die Herstellung der Sekundärverriegelung 20 für den Steckverbinder 1 in einem Zwei-Komponenten Verfahren. Bei einem Zwei-Komponenten Verfahren werden zwei unterschiedliche Kunststoffe zu einem Bauteil vereint. Das beschriebene Zwei-Komponenten Verfahren umfasst im Wesentlichen das Bilden des Grundkörpers 22 der Sekundärverrieglung 20 aus einem ersten Material, und danach das Bilden der Dichtung 24 aus einem zweiten Material auf dem Grundkörper 22 der Sekundärverriegelung 20. Die beiden Schritte können in einem Werkzeug durchgeführt werden, indem das Werkzeug durch Drehen oder Verwenden einer Indexplatte in eine jeweils passende/notwendige Position gebracht wird. In einem alternativen Verfahren kann der fertige Grundkörper 22 von einem ersten Werkzeugbereich entnommen werden und zum Bilden der Dichtung 24 in einen zweiten Werkzeugbereich eingelegt werden.

Im Verfahren wird bei der Sekundärverrieglung 20 bevorzugt im Schritt des Bildens des Grundkörpers 22 zumindest eine Aussparung, insbesondere ein Schlitz S, entlang der Längsachse X des Grundkörpers 22 gebildet. Der Schlitz S kann in alternativen Verfahren nachträglich in den Grundkörper, zum Beispiel durch mechanische Verfahren, eingebracht werden. Der Grundkörper 22 ist in der beschriebenen Ausführungsform aus einem harten Material, wie einem technischen Kunststoff, gebildet. Wäre der Grundkörper 22 als Zylinder, d.h. ohne eine Unterbrechung oder Vertiefung, gebildet, so wäre der Grundkörper 22 nicht flexibel. Der Schlitz S ermöglicht dem Grundkörper 22 eine Flexibilität.

In dem beschriebenen Verfahren wird diese Flexibilität auch mit dem Aufbringen der Dichtung 24 beibehalten. Die beschriebene Dichtung 24 ist eine weiche Komponente und umfasst bevorzugt Silikon. Eine Shore Härte kann je nach Anforderung und Anwendung angepasst werden. Darüber hinaus ist auch der Einsatz von Thermoplastischen Elastomeren (TPE) als Dichtungsmaterial möglich. Durch den flexiblen Grundkörper 22 und die weiche Dichtung 24 kann die Sekundärverriegelung 20 wie oben beschrieben mit einem passenden Gehäuse 10 in Eingriff gebracht werden.

Bei dem beschriebenen Verfahren können im Schritt des Bildens des Grundkörpers 22 der Sekundärverriegelung 20 Vertiefungen 29, bevorzugt Nuten 29, an dem Grundkörper 22 gebildet werden. Die Nuten 29 können einfach durch die Form der Kavitäten in dem Werkzeug gebildet werden. Die Nuten 29 werden verwendet, um den Grundkörper 22 beim Drehen des Werkzeugs, um die Dichtung 24 zu bilden, zu fixieren.

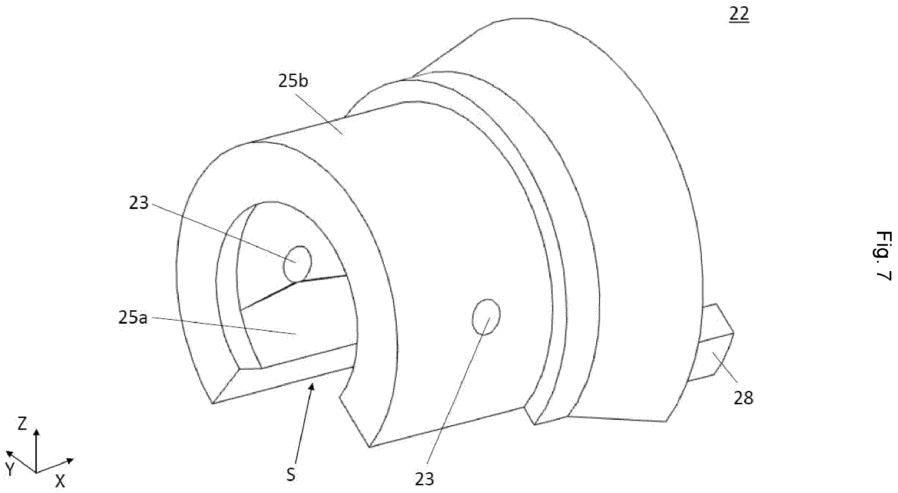

Weiterhin können im Schritt des Bildens des Grundkörpers 22 der Sekundärverriegelung 20 Löcher 23 in dem Grundkörper 22 gebildet werden (s. Fig. 7). Die Löcher 23 verbinden bevorzugt eine Außenseite 25b mit einer Innenseite 25a des Grundkörpers 22. In der dargestellten Ausführungsform sind die Löcher 23 im ersten Teilbereich 22a des Grundkörpers 22 angeordnet. Dies hat den Grund, dass die Dichtung 24 ausschließlich im ersten Teilbereich 22a angeordnet ist. In dem beschriebenen Verfahren werden die Löcher 23 beim Bilden der Dichtung 24 mit dem zweiten Material gefüllt. Beim Bilden der Dichtung 24 ermöglichen die Löcher 23 ein Entlüften und später dringt das flüssige Dichtungsmaterial beim Füllvorgang durch die Löcher 23 hindurch. So werden ungewollte Lufteinschlüsse in der Dichtung 24 vermieden und eine bessere Verbindung zwischen dem Grundkörper 22 und der Dichtung 24 hergestellt.

Das beschriebene Herstellungsverfahren kann mit einer Vorrichtung durchgeführt werden, die zumindest ein Werkzeug zur Herstellung von Spritzgussteilen mit zumindest einem geometrischen Unterschied aufweist. Dabei weist eine erste Geometrie an dem Werkzeug eine Kontur für den Grundkörper 22 der Sekundärverriegelung 20 auf, und eine zweite Geometrie an dem Werkzeug eine Kontur für den Grundkörper 22 mit der Dichtung 24. Die Vorrichtung kann eine Spritzgießmaschine oder eine Anlage, die eine Spritzgießmaschine aufweist, umfassen.

### BEZUGSZEICHENLISTE

- 1: Steckverbinder
- 2: Kabel
- 4: Innenleiterkontakt
- 6: Außenleiterkontakt
- 8: Crimphülse
- 9: Crimphülsenanschlag
- 10: Gehäuse
- 12: Öffnung
- 14: Hohlraum
- 15: Anschlagsfläche
- 16: Hinterschnitt
- 18: Kontaktöffnung
- 20: Sekundärverrieglung
- 21: Durchgangsöffnung
- 22: Grundkörper
- 22a: erster Teilbereich
- 22b: zweiter Teilbereich
- 23: Löcher
- 24: Dichtung
- 25a: Innenseite
- 25b: Außenseite
- 26: äußere Dichtungslippe
- 27: innere Dichtungslippe
- 28: Vorsprung
- 29: Vertiefungen
- S: Schlitz
- X: Längsrichtung
- Y: zweite Richtung
- Z: dritte Richtung

## Patentansprüche

1. Steckverbinder (1) für ein Kabel (2), aufweisend:
a. ein Gehäuse (10) mit zumindest einer Öffnung (12) und einem Hohlraum (14), wobei das Kabel (2) über die Öffnung (12) in den Hohlraum (14) einführbar ist;
b. zumindest einen Hinterschnitt (16), der am Umfang des Hohlraums (14) ausgebildet ist;
c. eine Sekundärverriegelung (20), die lösbar mit dem Hinterschnitt (16) in Eingriff stehen kann, wobei das Kabel (2) durch die Sekundärverriegelung (20) in dem Gehäuse (10) befestigt werden kann; und wobei
d. die Sekundärverriegelung (20) einen Grundkörper (22) umfasst, der einstückig mit einer Dichtung (24) ausgebildet ist, so dass die Sekundärverrieglung (20) das Gehäuse (10) wasserdicht verschließen kann,
e. die Sekundärverriegelung (20) einen ersten Teilbereich (22a) und einen zweiten Teilbereich (22b) aufweist, wobei die Dichtung (24) ausschließlich im ersten Teilbereich (22a) angeordnet ist;**dadurch gekennzeichnet, dass**
f. der Grundkörper (22) der Sekundärverriegelung (20) einen Schlitz (S) entlang einer Längsrichtung (X) aufweist, und der zweite Teilbereich (22b) eine Hohlkegelstumpfform, die sich vom Ende des ersten Teilbereichs (22a) bis zum Ende der Sekundärverriegelung (20) hin erweitert, und den vollständigen Schlitz (S) durch den Hohlkegelstumpf entlang der Längsrichtung (X) der Sekundärverriegelung (20) aufweist, wobei die Dichtung (24) den Schlitz (S) im ersten Teilbereich (22a) ausfüllt,
g. der erste Teilbereich (22a) wird zuerst in das Gehäuse (10) eingesetzt, das Gehäuse (10) im Bereich der zumindest einen Öffnung (12) einen kleineren Durchmesser als der zweite Teilbereich (22b) aufweist, und
h. die Sekundärverriegelung (20) im zweiten Teilbereich (22b) beim Einführen in das Gehäuse (10) radial zusammengedrückt wird und beim Erreichen einer Endposition, wenn sich der zweite Teilbereich (22b) im Bereich des Hinterschnitts (16) befindet, wieder radial erweitert.

2. Steckverbinder (1) nach Anspruch 1, bei dem die Dichtung (24) zumindest eine äußere Dichtungslippe (26) aufweist, die radial nach außen von der Dichtung (24) absteht, um eine wasserdichte Abdichtung zwischen der Sekundärverriegelung (20) und dem Gehäuse (10) zu erreichen; und/oder die Dichtung (24) zumindest eine innere Dichtungslippe (27) aufweist, die radial nach innen von der Dichtung (24) absteht, um eine wasserdichte Abdichtung zwischen der Sekundärverriegelung (20) und dem Kabel (2) zu erreichen.

3. Steckverbinder (1) nach Anspruch 1 oder 2, bei dem der Grundkörper (22) aus einem härteren Material als die Dichtung (24) gebildet ist, so dass die Sekundärverriegelung (20) stabil und elastisch verformbar ist.

4. Verfahren zum Herstellen einer Sekundärverriegelung (20) für einen Steckverbinder (1) nach einem der Ansprüche 1 - 3, wobei das Verfahren die folgenden Schritte aufweist:
a. Anwenden eines Zwei-Komponenten Verfahrens; und
b. Bilden eines Grundkörpers (22) der Sekundärverriegelung (20) aus einem ersten Material, wobei der Grundkörper(22) mit einem ersten Teilbereich (22a) und einem zweiten Teilbereich (22b) gebildet wird; wobei ein Schlitz (S) entlang einer Längsrichtung (X) des Grundkörpers gebildet wird, und wobei der zweite Teilbereich (22b) mit einer Hohlkegelstumpfform gebildet wird, die sich vom Ende des ersten Teilbereichs (22a) bis zum Ende der Sekundärverriegelung (20) hin erweitert, wobei der Schlitz (S) entlang der Längsrichtung (X) der Sekundärverriegelung (20) vollständig durch den Hohlkegelstumpf gebildet wird; und
c. danach Bilden einer Dichtung (24) aus einem zweiten Material auf dem Grundkörper (22) der Sekundärverriegelung (20) sodass der Grundkörper (22) einstückig mit der Dichtung (24) ausgebildet ist, wobei die Dichtung (24) ausschließlich im ersten Teilbereich (22a) gebildet wird und den Schlitz (S) im ersten Teilbereich (22a) ausfüllt.

5. Verfahren nach Anspruch 4, bei dem das Zwei-Komponentenverfahren ein Spritzgussverfahren umfasst, und das erste Material härter ist als das zweite Material.

6. Verfahren nach Anspruch 4 oder 5, bei dem im Schritt des Bildens des Grundkörpers (22) der Sekundärverriegelung (20) Vertiefungen (29), insbesondere Nuten, an dem Grundkörper (22) gebildet werden, so dass der Grundkörper (22) mit Hilfe der Vertiefungen (29) beim Bilden der Dichtung (24) zentriert werden kann.

7. Verfahren nach einem der Ansprüche 4 - 6, bei dem im Schritt des Bildens des Grundkörpers (22) der Sekundärverriegelung (20) Löcher (23) in dem Grundkörper (22) gebildet werden, und diese Löcher (23) beim Bilden der Dichtung (24) mit dem zweiten Material gefüllt werden.

8. Vorrichtung für das Verfahren nach einem der Ansprüche 4 -7, aufweisend:
a. ein Werkzeug zur Herstellung von Spritzgussteilen mit zumindest einem geometrischen Unterschied; wobei
b. eine erste Geometrie an dem Werkzeug eine Kontur für den Grundkörper (22) der Sekundärverriegelung (20) aufweist, wobei die erste Geometrie zum Bilden des Grundkörpers (22) mit einem ersten Teilbereich (22a), einem zweiten Teilbereich (22b), einem Schlitz (S) entlang einer Längsrichtung (X) des Grundkörpers (22) und einer Hohlkegelstumpfform des zweiten Teilbereichs (22b) ausgebildet ist, wobei sich die Hohlkegelstumpfform vom Ende des ersten Teilbereichs (22a) bis zum Ende der Sekundärverriegelung (20) hin erweitert und der Schlitz (S) entlang der Längsrichtung (X) der Sekundärverriegelung (20) vollständig durch den Hohlkegelstumpf gebildet wird;
c. eine zweite Geometrie an dem Werkzeug eine Kontur für den Grundkörper (22) mit der Dichtung (24) aufweist, wobei die zweite Geometrie zum Bilden der Dichtung (24) aus einem zweiten Material auf dem Grundkörper (22) der Sekundärverriegelung (20) ausgebildet ist, sodass der Grundkörper (22) einstückig mit der Dichtung (24) ausgebildet ist, wobei die Dichtung (24) ausschließlich im ersten Teilbereich (22a) gebildet wird und den Schlitz (S) im ersten Teilbereich (22a) ausfüllt.

## Claims

1. Plug-in connector (1) for a cable (2), comprising:
a. a housing (10) with at least one opening (12) and a cavity (14), wherein the cable (2) can be introduced into the cavity (14) via the opening (12);
b. at least one undercut (16) formed on the circumference of the cavity (14);
c. a secondary lock (20) which can be in releasable engagement with the undercut (16), wherein the cable (2) can be fastened by the secondary lock (20) in the housing (10); and wherein
d. the secondary lock (20) comprises a main body (22), which is formed in one piece with a seal (24), such that the secondary lock (20) can seal the housing (10) in a watertight manner,
e. the secondary lock (20) comprises a first partial region (22a) and a second partial region (22b), wherein the seal (24) is arranged exclusively in the first partial region (22a); **characterized in that**
f. the main body (22) of the secondary lock (20) has a slot (S) along a longitudinal direction (X), and the second partial region (22b) has a hollow frustoconical shape, which extends from the end of the first partial region (22a) as far as the end of the secondary lock (20), and has the complete slot (S) through the hollow truncated cone along the longitudinal direction (X) of the secondary lock (20), wherein the seal (24) fills the slot (S) in the first partial region (22a);
g. the first partial region (22a) is first inserted into the housing (10), and the housing (10) has a smaller diameter in the region of the at least one opening (12) than the second partial region (22b); and
h. the secondary lock (20) is radially compressed in the second partial region (22b) when inserted into the housing (10), and expands radially again when reaching an end position when the second partial region (22b) is situated in the region of the undercut (16).

2. Plug-in connector (1) according to Claim 1, in which the seal (24) has at least one outer seal lip (26), which extends radially outwards from the seal (24) in order to achieve a watertight seal between the secondary lock (20) and the housing (10); and/or
the seal (24) has at least one inner seal lip (27) which extends radially inwards from the seal (24) in order to provide a watertight seal between the secondary lock (20) and the cable (2).

3. Plug-in connector (1) according to Claim 1 or 2, in which the main body (22) is made of a harder material than the seal (24), such that the secondary lock (20) is stable and elastically deformable.

4. Method for producing a secondary lock (20) for a plug-in connector (1) according to any one of Claims 1 - 3, wherein the method comprises the following steps:
a. using a two-component method; and
b. forming a main body (22) of the secondary lock (20) from a first material, wherein the main body (22) is formed with a first partial region (22a) and a second partial region (22b); wherein a slot (S) is formed along a longitudinal direction (X) of the main body, and wherein the second partial region (22b) is formed with a hollow frustoconical shape, which extends from the end of the first partial region (22a) as far as the end of the secondary lock (20), wherein the slot (S) is formed completely by the hollow truncated cone along the longitudinal direction (X) of the secondary lock (20); and
c. subsequently, forming a seal (24) from a second material on the main body (22) of the secondary lock (20), such that the main body (22) is formed in one piece with the seal (24), wherein the seal (24) is formed exclusively in the first partial region (22a) and fills the slot (S) in the first partial region (22a).

5. Method according to Claim 4, wherein the two-component method comprises an injection moulding method, and the first material is harder than the second material.

6. Method according to Claim 4 or 5, in which, in the step of forming the main body (22) of the secondary lock (20), depressions (29), in particular grooves, are formed on the main body (22), such that the main body (22) can be centred with the aid of the depressions (29) when forming the seal (24).

7. Method according to any one of Claims 4 - 6, in which holes (23) are formed in the main body (22) in the step of forming the main body (22) of the secondary lock (20), and these holes (23) are filled with the second material when forming the seal (24).

8. Device for the method according to any one of Claims 4 - 7, comprising:
a. a tool for producing injection moulded parts with at least one geometric difference; wherein
b. a first geometry on the tool has a contour for the main body (22) of the secondary lock (20), wherein the first geometry for forming the main body (22) with a first partial region (22a), a second partial region (22b) and a slot (S) is formed along a longitudinal direction (X) of the main body (22) and a hollow frustoconical shape of the second partial region (22b), wherein the hollow frustoconical shape extends from the end of the first partial region (22a) as far as the end of the secondary lock (20), and the slot (S) is formed completely by the hollow truncated cone along the longitudinal direction (X) of the secondary lock (20);
c. a second geometry on the tool has a contour for the main body (22) with the seal (24), wherein the second geometry for forming the seal (24) from a second material is formed on the main body (22) of the secondary lock (20), such that the main body (22) is formed in one piece with the seal (24), wherein the seal (24) is formed exclusively in the first partial region (22a) and fills the slot (S) in the first partial region (22a).

## Revendications

1. Connecteur enfichable (1) pour un câble (2), comportant :
a. un boîtier (10) avec au moins une ouverture (12) et une cavité (14), le câble (2) pouvant être introduit dans la cavité (14) par l'ouverture (12) ;
b. au moins une contre-dépouille (16), qui est formée sur la périphérie de la cavité (14) ;
c. un mécanisme de verrouillage secondaire (20), qui peut être en prise de manière amovible avec la contre-dépouille (16), le câble (2) pouvant être fixé dans le boîtier (10) par le mécanisme de verrouillage secondaire (20) ; et
d. le mécanisme de verrouillage secondaire (20) comprenant un corps de base (22), qui est formé d'un seul tenant avec un joint d'étanchéité (24), de telle sorte que le mécanisme de verrouillage secondaire (20) peut fermer le boîtier (10) de manière étanche à l'eau,
e. le mécanisme de verrouillage secondaire (20) comportant une première zone partielle (22a) et une seconde zone partielle (22b), le joint d'étanchéité (24) étant disposé exclusivement dans la première zone partielle (22a) ; **caractérisé en ce que**
f. le corps de base (22) du mécanisme de verrouillage secondaire (20) comporte une entaille (S) le long d'une direction longitudinale (X), et la seconde zone partielle (22b) comporte une forme tronconique creuse, qui s'élargit depuis l'extrémité de la première zone partielle (22a) jusqu'à l'extrémité du mécanisme de verrouillage secondaire (20), et l'entaille complète (S) à travers le tronc de cône creux le long de la direction longitudinale (X) du mécanisme de verrouillage secondaire (20), le joint d'étanchéité (24) remplissant l'entaille (S) dans la première zone partielle (22a) ;
g. la première zone partielle (22a) est d'abord insérée dans le boîtier (10), le boîtier (10) comporte un diamètre inférieur à celui de la seconde zone partielle (22b) dans la zone de l'au moins une ouverture (12), et
h. le mécanisme de verrouillage secondaire (20) est comprimé radialement dans la seconde zone partielle (22b) lors de son introduction dans le boîtier (10) et s'élargit radialement à nouveau lorsqu'une position finale est atteinte lorsque la seconde zone partielle (22b) se trouve dans la zone de la contre-dépouille (16).

2. Connecteur enfichable (1) selon la revendication 1, dans lequel le joint d'étanchéité (24) comporte au moins une lèvre d'étanchéité extérieure (26) qui dépasse radialement vers l'extérieur du joint d'étanchéité (24) pour atteindre une étanchéification à l'eau entre le mécanisme de verrouillage secondaire (20) et le boîtier (10); et/ou
le joint d'étanchéité (24) comporte au moins une lèvre d'étanchéité intérieure (27), qui dépasse radialement vers l'intérieur du joint d'étanchéité (24) pour atteindre une étanchéification à l'eau entre le mécanisme de verrouillage secondaire (20) et le câble (2).

3. Connecteur enfichable (1) selon la revendication 1 ou 2, dans lequel le corps de base (22) est formé à partir d'un matériau plus dur que le joint d'étanchéité (24), de telle sorte que le mécanisme de verrouillage secondaire (20) est stable et élastiquement déformable.

4. Procédé de fabrication d'un mécanisme de verrouillage secondaire (20) pour un connecteur enfichable (1) selon l'une des revendications 1 à 3, le procédé comportant les étapes suivantes :
a. mise en œuvre d'un procédé à deux composantes ; et
b. formation d'un corps de base (22) du mécanisme de verrouillage secondaire (20) à partir d'un premier matériau, le corps de base (22) étant formé avec une première zone partielle (22a) et une seconde zone partielle (22b) ; une entaille (S) étant formée le long d'une direction longitudinale (X) du corps de base, et la seconde zone partielle (22b) étant formée avec une forme tronconique creuse, qui s'élargit depuis l'extrémité de la première zone partielle (22a) jusqu'à l'extrémité du mécanisme de verrouillage secondaire (20), l'entaille (S) étant formée complètement par le tronc de cône creux le long de la direction longitudinale (X) du mécanisme de verrouillage secondaire (20) ; et
c. puis formation d'un joint d'étanchéité (24) à partir d'un deuxième matériau sur le corps de base (22) du mécanisme de verrouillage secondaire (20) si bien que le corps de base (22) est formé d'un seul tenant avec le joint d'étanchéité (24), le joint d'étanchéité (24) étant formé exclusivement dans la première zone partielle (22a) et remplissant l'entaille (S) dans la première zone partielle (22a).

5. Procédé selon la revendication 4, dans lequel le procédé à deux composantes comprend un procédé de moulage par injection, et le premier matériau est plus dur que le deuxième matériau.

6. Procédé selon la revendication 4 ou 5, dans lequel, dans l'étape de formation du corps de base (22) du mécanisme de verrouillage secondaire (20), des renfoncements (29), en particulier des rainures, sont formés sur le corps de base (22), de telle sorte que le corps de base(22) peut être centré à l'aide des renfoncements (29) lors de la formation du joint d'étanchéité (24).

7. Procédé selon l'une des revendications 4 à 6, dans lequel des trous (23) sont formés dans le corps de base (22) dans l'étape de formation du corps de base (22) du mécanisme de verrouillage secondaire (20), et lesdits trous (23) sont remplis avec le deuxième matériau pendant la formation du joint d'étanchéité (24).

8. Dispositif pour le procédé selon l'une des revendications 4 à 7, comportant :
a. un outil destiné à fabriquer des pièces moulées par injection avec au moins une différence géométrique ;
b. une première géométrie sur l'outil comportant un contour pour le corps de base (22) du mécanisme de verrouillage secondaire (20), la première géométrie étant formée pour former le corps de base (22) avec une première zone partielle (22a), une seconde zone partielle (22b), une entaille (S) le long d'une direction longitudinale (X) du corps de base (22) et une forme tronconique creuse de la seconde zone partielle (22b), la forme tronconique creuse s'élargissant depuis l'extrémité de la première zone partielle (22a) jusqu'à l'extrémité du mécanisme de verrouillage secondaire (20), et l'entaille (S) étant entièrement formée par le tronc de cône creux le long de la direction longitudinale (X) du mécanisme de verrouillage secondaire (20) ;
c. une deuxième géométrie sur l'outil comportant un contour pour le corps de base (22) avec le joint d'étanchéité (24), la deuxième géométrie étant formée pour former le joint d'étanchéité (24) à partir d'un deuxième matériau sur le corps de base (22) du mécanisme de verrouillage secondaire (20), si bien que le corps de base (22) est formé d'un seul tenant avec le joint d'étanchéité (24), le joint d'étanchéité (24) étant formé exclusivement dans la première zone partielle (22a) et remplissant l'entaille (S) dans la première zone partielle (22a) .
